Europäisches Patentamt

European Patent Office

Office européen des brevets

(11) Veröffentlichungsnummer: **0 420 109 A1**

## (12) EUROPÄISCHE PATENTANMELDUNG

(21) Anmeldenummer: 90118316.0

(22) Anmeldetag: 24.09.90

(51) Int. Cl.⁵: G01F 1/712

(30) Priorität: 25.09.89 LU 87594

(43) Veröffentlichungstag der Anmeldung:
03.04.91 Patentblatt 91/14

(84) Benannte Vertragsstaaten:
BE DE DK ES FR GB GR IT LU NL

(71) Anmelder: EUROPÄISCHE
ATOMGEMEINSCHAFT (EURATOM)
Bâtiment Jean Monnet Plateau du Kirchberg
L-2920 Luxembourg(LU)

(72) Erfinder: Ohlmer, Eggert
Via Girola 22
I-21027 Ispra (VA)(IT)
Erfinder: Wesser, Ulf
Kissinger Strasse 15
W-1000 Berlin 33(DE)
Erfinder: Hummel, Rudolf
Nogatstrasse 44
W-1000 Berlin 44(DE)

(74) Vertreter: Weinmiller, Jürgen
Lennéstrasse 9 Postfach 24
W-8133 Feldafing(DE)

(54) **Verfahren und Vorrichtung zur Massenstrommessung in einem Kanal mit Mehrphasenströmung.**

(57) Die Erfindung bezieht sich auf ein Verfahren und eine Anordnung zur Massenstrommessung in einem Kanal (1), in dem eine Mehrphasen- oder Mehrkomponentenströmung herrscht, wobei die Geschwindigkeit (v) und die Dichte (δ) gemessen und daraus der Massenstrom errechnet wird. Erfindungsgemäß wird die Dichte in zwei in Strömungsrichtung hintereinanderliegenden Meßebenen (I, II) mit Hilfe der Photonenabsorptionsmessung nach dem Tomographieprinzip gemessen, und die Geschwindigkeit wird aus den lokalen Dichtemeßwerten durch Korrelation der Messungen in den beiden Meßebenen abgeleitet.

Fig.1

## VERFAHREN UND VORRICHTUNG ZUR MASSENSTROMMESSUNG IN EINEM KANAL MIT MEHRPHASEN-STRÖMUNG

Die Erfindung bezieht sich auf ein Verfahren und eine Vorrichtung zur Massenstrommessung in einem Kanal, in dem eine Mehrphasen- oder Mehrkomponentenströmung herrscht, wobei die Geschwindigkeit und die Dichte gemessen werden und daraus der Massenstrom errechnet wird.

Die Massenstrommessung von Strömungen, die aus Fluiden bestehen, wird in vielen industriellen Prozessen benötigt. Der Massenstrom in einem Querschnitt S wird durch die folgende Formel definiert:

$$\dot{m} = \delta \cdot v \cdot S,$$

in der $\delta$ die Dichte, $v$ die Flußgeschwindigkeit und S die Querschnittsfläche bedeuten. Die Massenstrommessung erfordert also die Messung der Dichte und der Geschwindigkeit.

Schwierigkeiten entstehen, wenn diese Meßwerte örtlich oder zeitlich variieren, wie dies für Mehrphasen- oder Mehrkomponentenströmungen leider der Fall ist.

In dem Buch "Measuring Techniques in Gas-Liquid Two-Phase Flows" von J. M. Delhaye und G. Cognet, Springer-Verlag 1984, Seiten 435 bis 454 ist ein Verfahren zur Massenstrommessung in Zweiphasenströmungen angegeben, das auf einer Magnetspinresonanzmethode beruht. Dieses Verfahren eignet sich aber nur für Substanzen mit polarisierbaren Molekülen und ist bisher auch über das Versuchsstadium nicht hinausgekommen.

Weiter wurde bereits vorgeschlagen (siehe z.B. das Buch "Mass flow measurements" 1984, FED Vol. 17 von T.R. Hedrick und R.M. Reimer, Seite 75), die Corioliskraft zur Messung des Massenstroms heranzuziehen. In einem vibrierenden Rohrsystem ist nämlich die Auslenkung des Rohrs, die durch die Corioliskraft induziert wird, proportional zum Massenfluß. Ein solches Verfahren eignet sich aber nicht für Zweiphasenströmungen.

Schließlich sei noch auf einen Aufsatz in der Zeitschrift "Atomkernenergie/Kerntechnik", Vol. 33, 1979, Seiten 139 bis 143 hingewiesen, in dem vorgeschlagen wird, die Geschwindigkeit der einzelnen Phasen des Fluids durch unterschiedliche Markierungen der Fluidkomponente mit Radionukliden zu messen. In vielen Fällen wird jedoch der damit verbundene Einsatz radioaktiver Stoffe nicht akzeptiert.

Aufgabe der Erfindung ist es daher, ein Verfahren und eine Vorrichtung zur Massenstrommessung in einem Kanal anzugeben, die sich durch einfachen Aufbau, Betriebssicherheit und den Einsatz umweltverträglicher Mittel gegenüber den bekannten Verfahren und Vorrichtungen auszeichnen.

Diese Aufgabe wird bezüglich des Verfahrens dadurch gelöst, daß die Dichte in zwei in Strömungsrichtung hintereinanderliegenden Meßebenen mit Hilfe der Photonenabsorptionsmessung nach dem Tomographieprinzip gemessen wird und daß die Geschwindigkeit aus den lokalen Dichtemeßwerten durch Korrelation der Messungen in den beiden Meßebenen abgeleitet wird.

Bezüglich der Vorrichtung zur Durchführung dieses Verfahrens wird auf die entsprechenden Ansprüche verwiesen.

Die Erfindung wird nun anhand einiger bevorzugter Ausführungsbeispiele mit Hilfe der Zeichnungen näher erläutert.

Figur 1 zeigt schematisch eine erfindungsgemäße Vorrichtung im Schnitt entlang der Achse des Strömungskanals.

Die Figuren 2a und 2b zeigen zwei Schnitte senkrecht zur Darstellung gemäß Figur 1 entlang der beiden Meßebenen.

Fig. 3 zeigt eine Variante zu Fig. 1.

Gemäß dem erfindungsgemäßen Verfahren wird der Massenstrom aus der Messung der Strömungsgeschwindigkeit und Dichte an verschiedenen Punkten im Strömungsquerschnitt gemäß der eingangs erwähnten Formel abgeleitet. Die Dichtewerte werden mit Hilfe der Gammastrahlungs- oder einer anderen Photonenabsorptionsmessung ermittelt und nach dem aus der Tomographie bekannten Analyseverfahren für die verschiedenen Punkte ausgewertet. Die örtlichen Geschwindigkeitswerte werden ihrerseits durch Korrelationsmessungen aus den erwähnten Dichtemessungen abgeleitet, die an zwei in Strömungsrichtung hintereinanderliegenden Meßebenen erfolgen.

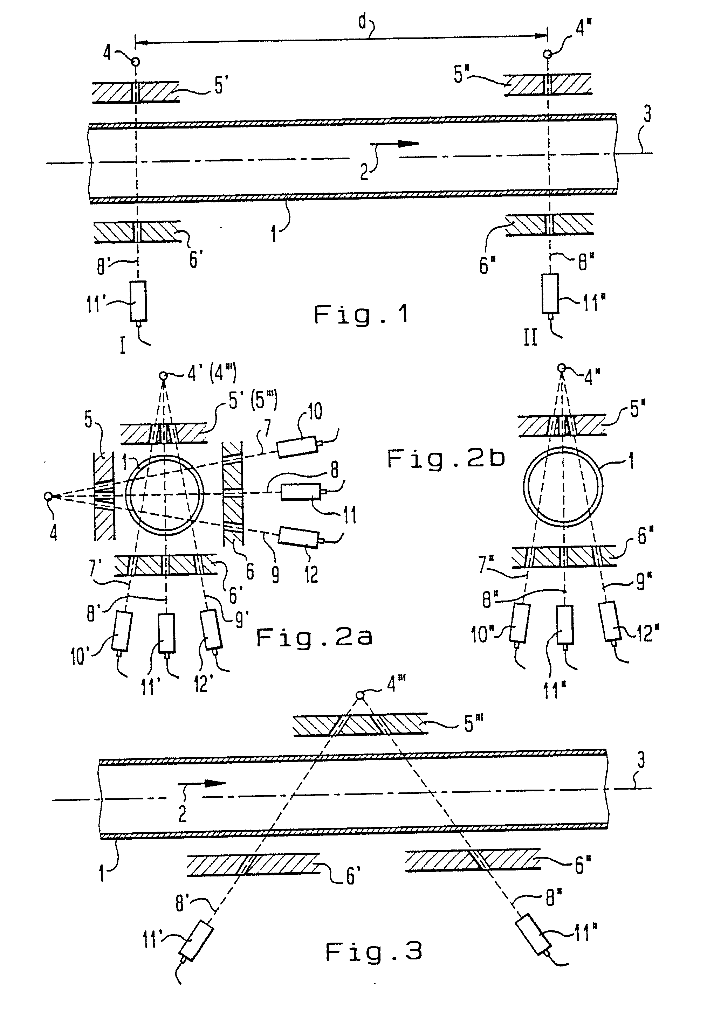

In Figur 1 ist ein geradliniger Strömungskanal 1 dargestellt, in dem der zu messende Massenstrom entlang eines Pfeils 2 nacheinander durch zwei Meßebenen I und II verläuft, die zur Achse 3 des Kanals senkrecht stehen. Der Abstand zwischen den beiden Meßebenen sei d.

Figur 2a zeigt einen Querschnitt durch die Anordnung gemäß Figur 1 entlang der Meßebene I und Figur 2b entlang der Meßebene II.

In der Meßebene I sind zwei gleichartige Meßsysteme angeordnet, während sich in der Meßebene II ein derartiges System befindet.

Jedes System besitzt eine Quelle 4, 4' und 4", die eine Gamma strahlung oder andere Photonenstrahlung aussendet. Durch Kollimatoren 5, 5', 5" bzw. 6, 6', 6" werden in jedem Meßsystem drei Strahlen 7, 8, 9 bzw. 7', 8', 9' bzw. 7", 8", 9" gebildet, die jenseits des Kanals 1 auf Detektoren 10, 11, 12 bzw. 10', 11', 12' bzw. 10", 11", 12" treffen. Das von den Bauteilen 4 bis 6 und 10 bis 12 gebildete erste Meßsystem steht zu den von den Bauteilen 4' bis 6' und 10' bis 12' gebildeten zweiten Meßsystem in der Meßebene I im wesentlichen senkrecht und die Strahlen 7, 8, 9 bilden mit den Strahlen 7', 8', 9' eine Matrix von neun Kreuzungspunkte im Kanal, an denen nach dem Tomographieprinzip die lokale Dichte des Massenstroms gemessen wird. Hierzu dient ein in den Figuren nicht dargestellter Rechner mit entsprechender Programmierung, dem die digitalisierten Detektorsignale zugeführt werden.

Das von den Elementen 4" bis 6" und 10" bis 12" gebildete dritte Meßsystem, das sich in der Meßebene II befindet, ist genauso aufgebaut und angeordnet wie eines der beiden Meßsysteme in der ersten Ebene, nämlich das System mit den Elementen 4' bis 6' und 10' bis 12'. Dadurch ergeben sich in den Signalen dieser beiden Systeme zum Teil identische Informationen, da charakteristische stochastische Dichtemuster im Fluid nacheinander beide Meßebenen erreichen.

Auch zwischen den Signalen der Detektoren 10, 11, 12 und denen der Detektoren 10", 11" und 12" ergeben sich zum Teil korrelierte Signale. In diesem Fall ist die Identität der Information aber auf die Kreuzungspunkte begrenzt, die zwischen diesen beiden Strahlensystemen bei einer Projektion der beiden Meßebenen aufeinander definiert sind.

Bei sorgfältiger Korrelationsanalyse der Meßsignale aus den beiden Meßebenen I und II kann die Geschwindigkeit der Strömung an denselben über den Kanalquerschnitt matrixartig verteilten Punkten ermittelt werden. Durch diese Auswertung der Meßsignale der beiden Ebenen läßt sich die Zeitverzögerung charakteristischer gemeinsamer Muster in den Signalen der beiden Meßebenen ermitteln und damit die Geschwindigkeit der Strömung an den erwähnten Kreuzungspunkten unter Berücksichtigung des Abstands d zwischen den beiden Meßebenen definieren.

Der Massenfluß gemäß der eingangs angegebenen Formel wird dann nicht aus den Mittelwerten von Dichte und Geschwindigkeit über den gesamten Querschnitt, sondern als Summe der lokalen Massenstromwerte an den erwähnten Kreuzungspunkten berechnet, die ihrerseits, wie erwähnt, proportional zur Dichte und zur Geschwindigkeit an dem jeweils betrachteten Matrixpunkt ist. Dieses Auswerteverfahren führt zu wesentlich genaueren Ergebnissen, als wenn zuerst die mittlere Dichte und die mittlere Geschwindigkeit ermittelt würden.

Fig. 3 zeigt eine Variante zu Fig. 1, in der die beiden Meßebenen I und II wie ein Satteldach zueinander geneigt sind, wobei an der Firstlinie eine gemeinsame Photonenquelle 4''' angeordnet ist. Die Kollimatoren 5' und 5'' sind hier zu einem gemeinsamen Kollimator 5''' zusammengefaßt, der also jeweils drei Durchlaßkanäle für die Strahlung in jeder der Ebenen I und II besitzt. Der Abstand zwischen den beiden Meßebenen ist zwar hier nicht mehr konstant, wie im Fall der Fig. 1, aber da die Messungen der Dichte und der Geschwindigkeit lokale Messungen an ganz bestimmten Punkten der Meßebenen sind, für die jeweils der Wert d aus der geometrischen Anordnung bekannt ist, können auch für diesen Fall die lokalen Massenstromwerte und daraus der gesamte Massenstrom genau berechnet werden.

Im übrigen lassen sich die Figuren 2a und 2b in gleicher Weise als Schnittbilder durch die Meßebenen I und II gemäß Fig. 3 interpretieren.

Die Erfindung ist nicht im einzelnen auf die dargestellten und erläuterten Ausführungsbeispiele beschränkt. So können auch mehr als drei Strahlen von jeder Quelle ausgehen, so daß die Matrix der Meßpunkte im Kanalquerschnitt mehr als drei Zeilen und Spalten besitzt. Als Photonenquelle kann außer einer Gammaquelle auch eine Röntgenquelle oder eine ähnliche Strahlungsquelle Verwendung finden. Die beiden Meßsysteme in der Meßebene I brauchen auch nicht zueinander senkrecht zu stehen, sondern es genügt, wenn die Strahlen so angeordnet sind, daß sie eine über den Querschnitt des Kanals gut verteilte Matrix von Kreuzungspunkten bilden.

Darüber hinaus kann auch in der Meßebene II ein zweites Meßsystem angeordnet werden, so daß auch in dieser Ebene zwei Systeme vorhanden sind wie in Ebene I, vgl. Figur 2a. Hierbei müssen jedoch die jeweils zwei Strahlsysteme geometrisch deckungsgleich bezüglich einer Projektion der beiden Meßebenen aufeinander angeordnet sein. Wenn diese Ausführung mit insgesamt vier Strahlsystemen auch aufwendiger ist als die gemäß Figur 2b, so hat sie aber den Vorteil größerer Zuverlässigkeit durch die zusätzlichen Signalinformationen.

## Ansprüche

1. Verfahren zur Massenstrommessung in einem Kanal, in dem eine Mehrphasen- oder Mehrkomponentenströmung herrscht, wobei die Geschwindigkeit und die Dichte gemessen und daraus der Massenstrom errechnet wird, dadurch gekennzeichnet, daß die Dichte in zwei in Strömungsrichtung hintereinanderliegenden Meßebenen mit Hilfe der Photonenabsorptionsmessung nach dem Tomographieprinzip gemessen wird und daß die Geschwindigkeit aus den lokalen Dichtemeßwerten durch Korrelation der Messungen in den beiden Meßebenen abgeleitet wird.

2. Vorrichtung zur Durchführung des Verfahrens nach Anspruch 1, dadurch gekennzeichnet, daß in einer ersten Meßebene (I) des Kanals (1) zwei aus je einer Photonenquelle (4, 4'), einem Kollimator (5, 5'; 6, 6') und einer Detektoranordnung (10, 11, 12; 10', 11', 12') bestehende Meßsysteme so angeordnet sind, daß je mindestens drei Strahlen (7, 8, 9; 7', 8', 9') in dieser ersten Meßebene durch den Kanal (1) verlaufen, die jenseits des Kanals auf die Detektoren (10, 11, 12; 10', 11', 12') auftreffen, wobei sich die Strahlen (7, 8, 9) des einen Meßsystems mit denen (7', 8', 9') des anderen Meßsystems an in dieser gemeinsamen Ebene matrixartig verteilt liegenden Punkten kreuzen, daß in der zweiten Meßebene (II) des Kanals (1) mindestens ein weiteres Meßsystem angeordnet ist, das aus einer Photonenquelle (4''), einem weiteren Kollimator (5'', 6'') und weitere Detektoren (10'', 11'', 12'') in gleicher geometrischer Anordnung wie eines der Meßsysteme in der ersten Meßebene (I) besteht, und daß ein Auswertegerät vorgesehen ist, das Meßsignale der Detektoren tomographisch und korrelierend auswertet.

3. Vorrichtung zur Durchführung des Verfahrens nach Anspruch 1, dadurch gekennzeichnet, daß in einer ersten Meßebene (I) des Kanals zwei aus je einer Photonenquelle (4, 4'), einem Kollimator (5, 5'') und einer Detektoranordnung (10, 11, 12; 10', 11', 12') bestehender Meßsysteme so angeordnet sind, daß je mindestens drei Strahlen (7, 8, 9; 7', 8', 9') in dieser zur Kanalachse geneigten ersten Meßebene (I) des Kanals (1) verlaufen, die jenseits des Kanals auf die Detektoren (10, 11, 12; 10', 11', 12') der zugeordneten Detektoranordnung auftreffen, wobei sich die Strahlen (7, 8, 9) des einen Meßsystems mit denen (7', 8', 9') des anderen Meßsystems an in dieser gemeinsamen Meßebene (I) matrixartig verteilt liegenden Punkten kreuzen, daß die zweite Meßebene (II) derart zur Kanalachse (3) geneigt ist, daß eine gemeinsame Photonenquelle (4''') von der Schnittlinie der beiden Ebenen (I, II) aus sowohl dieses Meßsystem der zweiten Meßebene als auch eines der beiden Meßsysteme der ersten Meßebene (I) speist, und daß ein Auswertegerät vorgesehen ist, das die Meßsignale der Detektoren tomographisch und korrelierend auswertet.

4. Vorrichtung nach einem der Ansprüche 2 bis 3, dadurch gekennzeichnet, daß das Auswertegerät ein programmgesteuerter digitaler Rechner ist.

5. Vorrichtung nach einem der Ansprüche 2 bis 4, dadurch gekennzeichnet, daß die Kollimatoren so ausgebildet sind, daß von jeder Photonenquelle in einer Meßebene (I, II) mindestens drei Strahlen ausgehen.

Fig.1

Fig.2a

Fig.2b

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 216 526 (NATIONAL RESEARCH)<br>* Seite 2, Zeilen 7 - 16 ** Seite 5, Zeile 30 - Seite 8, Zeile 25<br>** Seite 10, Zeilen 5 - 12 @ Seite 11, Zeile 14 -Seite 12,<br>Zeile 24; Figuren 3-5, 17-19 *<br>– – – | 1,2,4,5 | G 01 F 1/712 |
| Y | DE-A-2 304 618 (GOSSEN)<br>* Seite 3, Absatz 1 - Seite 5, Absatz 2; Figuren 1-5 *<br>– – – | 1,4,5 | |
| Y | IEEE TRANS. ON NUCLEAR SCIENCE vol. NS-27, no. 1,<br>Februar 1980, NEW YORK, US Seiten 814 - 820; A.C. DE<br>VUONO ET AL: "DESIGN OF AN ISOTOPIC CT SCANNER<br>FOR TWO PHASE FLOW MEASUREMENTS"<br>* Seite 814, linke Spalte, Absatz 3 ** Seite 816, linke Spalte,<br>Absatz 1 - Seite 818, linke Spalte, Absatz 3; Figuren 3-5 *<br>– – – | 1,4,5 | |
| A | REVIEW OF SCIENTIFIC INSTRUMENTS vol. 57, no. 4,<br>April 1986, NEW YORK, US Seiten 602 - 611; C.K. ZOLTANI<br>ET AL: "FLASH X-RAY COMPUTED TOMOGRAPHY FACI-<br>LITY FOR MICROSECOND EVENTS"<br>* Seite 603, linke Spalte; Figur 2 *<br>– – – | 2,3 | |
| A | PHYS. MED. BIOL. vol. 21, no. 5, 1976, Seiten 689 - 732;<br>R.A. BROOKS ET AL: "PRINCIPLES OF COMPUTER ASSI-<br>STED TOMOGRAPHY (CAT) IN RADIOGRAPHIC AND RA-<br>DIOISOTOPIC IMAGING"<br>* Seite 722, Absatz 4; Figur 18b *<br>– – – – – | 2,3 | **RECHERCHIERTE SACHGEBIETE (Int. Cl.5)**<br><br>G 01 F<br>G 01 N |

Der vorliegende Recherchenbericht wurde für alle Patentansprüche erstellt

| Recherchenort | Abschlußdatum der Recherche | Prüfer |
|---|---|---|
| Den Haag | 17 Dezember 90 | HEINSIUS R. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus anderen Gründen angeführtes Dokument

&: Mitglied der gleichen Patentfamilie,
  übereinstimmendes Dokument